# DEMANDE DE BREVET EUROPEEN

(11) **EP 4 686 229 A1**
(43) Date de publication de la demande: **28.01.2026**
(21) Numéro de dépôt: 25183998.1
(22) Date de dépôt: 19.06.2025
(51) Int. Cl.: H04W 4/02, H04W 4/80, G07C 9/00, H04B 1/7163, B60R 25/24

(54) **PLANIFICATION DE LOCALISATIONS UWB AVEC DÉCALAGE**

(30) Priorité: 23.07.2024 FR 2408122
(71) Demandeur: Valeo Comfort and Driving Assistance, 94000 Créteil (FR)
(72) Inventeur: DJOKIC, Georges, 94000 Créteil (FR); OGUZ, Onur, 94000 Créteil (FR); RICHARD, Yves, 94000 Créteil (FR)
(74) Mandataire: Delaval, Guillaume Laurent

(57) **Abrégé**

On propose un procédé de planification implémenté par un système de véhicule comprenant un ou plusieurs capteurs UWB. Le système a enregistré une pluralité d'identifiants portatifs. Le système et chaque identifiant portatif sont configurés pour communiquer en utilisant les protocoles de communication UWB et BLE. Le procédé comprend une réception, pour chaque identifiant portatif, d'une programmation respective comprenant une répétition, à une fréquence respective, de localisations UWB avec le système UWB de véhicule. Le procédé comprend un calcul d'un décalage temporel de la programmation respective d'au moins un identifiant portatif pour optimiser la concaténation des localisations UWB des identifiants portatifs. Le procédé comprend un envoi, à l'au moins un identifiant portatif, d'un ordre d'application du décalage temporel calculé en utilisant le protocole de communication BLE.

Le procédé offre une utilisation améliorée au système UWB de véhicule

## Description

### Domaine technique

La présente divulgation concerne un procédé de planification et un procédé d'utilisation d'un système de véhicule, un système de véhicule configuré pour exécuter ou être utilisé selon de tels procédés et un programme informatique pour l'exécution de tels procédés.

### Arrière-plan technique

Il existe aujourd'hui des véhicules équipés d'un système comprenant un ou plusieurs capteurs UWB (acronyme de l'anglais « Ultra Wide Band », qui signifie en français « Bande Ultra Large ») installés dans le véhicule. Un tel système de véhicule enregistre généralement un ensemble d'identifiants portatifs (tels que des boîtiers de clé ou des dispositifs tiers comme des téléphones portables ou des montres connectées), et est ensuite capable de déterminer la position de chacun de ces identifiants portatifs à partir de localisations UWB réalisées entre chacun des identifiants portatifs et les capteurs UWB du système. Chacune de ces localisations UWB comprend généralement des échanges UWB entre l'identifiants portatifs impliqué et chacun des capteurs UWB du véhicule. Ces échanges UWB peuvent par exemple permettre de déterminer les distances respectives entre l'identifiant portatif et chaque capteur UWB (par exemple avec une mesure de type « temps de vol ») et le système peut en déduire la localisation de l'identifiant portatif. Le système de véhicule est ainsi capable de localiser en temps réel plusieurs identifiants portatifs en même temps (comme par exemple le boîtier de clé du conducteur et le téléphone portable d'un passager), et d'exécuter en fonction de la localisation de ces identifiants différentes fonctionnalités du véhicule, telles que par exemple l'ouverture des portes et/ou le démarrage du véhicule lorsqu'un des utilisateurs approche du véhicule.

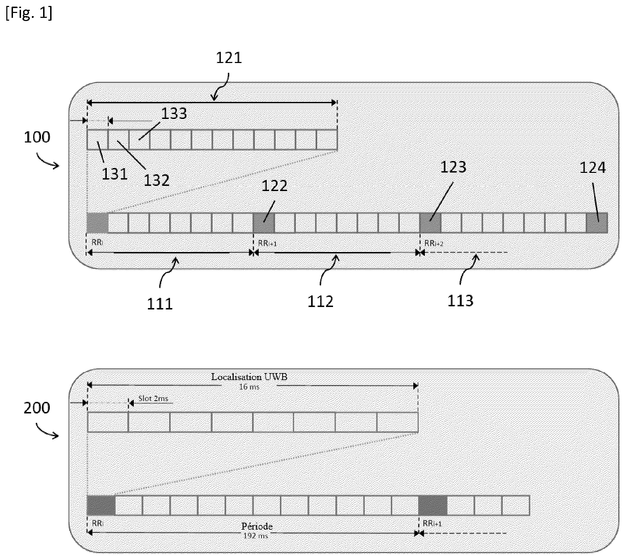

Pour réaliser ces localisations UWB, chaque identifiant portatif peut être configuré pour envoyer sa programmation respective au système de véhicule, par exemple lorsque celui-ci entre dans un certain périmètre autour du véhicule. Le système de véhicule et l'identifiant portatif peuvent ensuite être configurés pour réaliser les localisations UWB selon la programmation respective établie. La [Fig. 1] montre un exemple de telles programmations reçues pour un ensemble de deux identifiants portatifs enregistrés par le système de véhicule : une première programmation 100 pour un premier identifiant portatif et une deuxième programmation 200 pour un deuxième identifiant portatif. La programmation reçue de chaque identifiant portatif comprend, sur une durée prédéterminée divisée en périodes (111, 112 et 113 pour la première programmation 100), une localisation UWB pour chacune des périodes de la durée prédéterminée (la localisation UWB 121 pour la période 111, la localisation UWB 122 pour la période 122, etc.). Chacune de ces périodes est généralement elle aussi divisée en un nombre prédéterminé de créneaux (12 créneaux par période dans cet exemple pour le premier identifiant portatif, et 8 créneaux par période pour le deuxième), et la programmation comprend, pour chaque localisation, le créneau de la période sur lequel la localisation est prévue. Par exemple, dans cet exemple les localisations UWB sont toujours prévues sur le premier créneau de la période pour les deux identifiants portatifs. Chaque créneau est lui-même divisé en une série d'intervalles de temps 131, 132, etc. (appelés en anglais « slot »), à l'intérieur desquels, pendant la localisation UWB réalisée sur ce créneau, les échanges UWB entre l'identifiant portatif impliqué et les capteurs UWB du système sont réalisées.

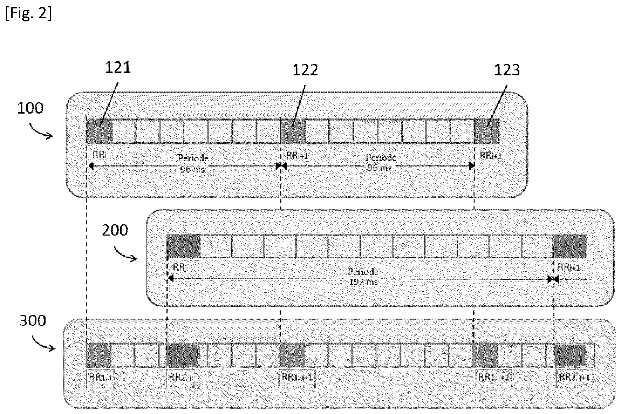

Après la réception des différentes programmations, le véhicule et les identifiants portatifs impliqués sont configurés pour exécuter les localisations UWB programmées. Cependant, les localisations UWB impliquant les différents identifiants portatifs sont généralement espacées les unes des autres. Par exemple, comme illustré sur la figure 2 qui reprend les exemples de programmation de la figure 1, la programmation impliquant le premier identifiant portatif peut être déjà en cours d'exécution lorsque le deuxième identifiant portatif envoie sa programmation au véhicule, et sa programmation peut donc être exécutée en décalée par rapport à celle du premier identifiant portatif (les différentes localisations prévues sont indiquées sur une même ligne de temps 300 sur la figure 2). Pendant l'exécution, les localisations UWB impliquant les deux identifiants portatifs sont donc espacées les unes des autres, ce qui n'est pas optimal. En effet, premièrement, une telle exécution désordonnée laisse peu d'espace disponible pour exécuter d'autres localisations UWB. Il est donc difficile d'ajouter des localisations UWB avec un nouvel identifiant portatif sans risque de collision entre les localisations UWB exécutées. Deuxièmement, cette exécution demande aux composants du système de véhicule impliqués de s'éteindre et de s'allumer très souvent (après chaque localisation), ce qui augmente l'énergie consommée et l'usure.

C'est pourquoi, il existe un besoin pour un système de véhicule amélioré.

### Résumé

On propose un procédé de planification implémenté par un système de véhicule comprenant un ou plusieurs capteurs UWB (ci-après dénommé « procédé de planification », ou simplement « procédé »). Le système a enregistré une pluralité d'identifiants portatifs. Le système et chaque identifiant portatif sont configurés pour communiquer en utilisant les protocoles de communication UWB et BLE. Le procédé comprend une réception, pour chaque identifiant portatif, d'une programmation respective comprenant une répétition, à une fréquence respective, de localisations UWB avec le système UWB de véhicule. Le procédé comprend un calcul d'un décalage temporel de la programmation respective d'au moins un identifiant portatif pour optimiser la concaténation des localisations UWB des identifiants portatifs. Le procédé comprend un envoi, à l'au moins un identifiant portatif, d'un ordre d'application du décalage temporel calculé en utilisant le protocole de communication BLE.

La pluralité d'identifiants portatifs peut comprendre un premier identifiant portatif et un deuxième identifiant portatif. Le décalage temporel peut être calculé pour accoler temporellement les localisations UWB impliquant le premier identifiant portatif et les localisations UWB impliquant le deuxième identifiant portatif.

La pluralité d'identifiants portatifs peut comprendre en outre au moins un troisième identifiant portatif. Le procédé peut comprendre le calcul d'un décalage temporel et l'envoi d'un ordre d'application pour chacune des programmations respectives des deuxième et troisième identifiants portatifs. Le décalage temporel peut être calculé pour accoler temporellement les localisations UWB impliquant les premier, deuxième et troisième identifiants portatifs.

Le décalage temporel peut être à appliquer à partir d'une période à venir espacée d'une période en cours au moment de l'exécution du procédé. L'espacement entre la période en cours et la période à venir peut être égal à un nombre prédéterminé de périodes.

Les fréquences respectives avec lesquelles les localisations UWB sont répétées peuvent représenter chacune une période respective égale à un multiple d'une durée prédéterminée, par exemple égale à un multiple de 96 millisecondes.

Les étapes de calcul et d'envoi peuvent être répétés au moins toutes les 25 secondes.

Les étapes de calcul et d'envoi peuvent être répétées à chaque réception d'une nouvelle programmation respective pour un nouvel identifiant portatif.

On propose également un procédé d'utilisation d'un système de véhicule comprenant un ou plusieurs capteurs UWB (ci-après dénommé « procédé d'utilisation »). Le système a enregistré une pluralité d'identifiants portatifs. Le procédé d'utilisation comprend une exécution des localisations UWB planifiées selon le procédé de planification.

On propose également un système de véhicule comprenant un ou plusieurs capteurs UWB. Le système UWB est configuré pour exécuter le procédé de planification et/ou pour être utilisé selon le procédé d'utilisation.

On propose également un programme d'ordinateur pour système de véhicule. Le programme d'ordinateur comprend des instructions qui, lorsque le programme est exécuté par un processeur du système de véhicule, conduisent celui-ci à exécuter le procédé de planification et/ou à être utilisé selon le procédé d'utilisation.

On propose également un support de stockage lisible par ordinateur sur lequel est enregistré ledit programme d'ordinateur.

### Brève description des figures

Des exemples non-limitants vont être décrits en référence aux figures suivantes :
Les [Fig. 1] et [Fig. 2] illustrent un exemple de solution existante de planification de localisations UWB avec des dispositifs portatifs.
La [Fig. 3] illustre un exemple d'organigramme du procédé de planification.
La [Fig. 4] illustre un exemple de système de véhicule.
Les [Fig. 5] et [Fig. 6] illustrent des exemples d'implémentation du procédé de planification.

### Description détaillée

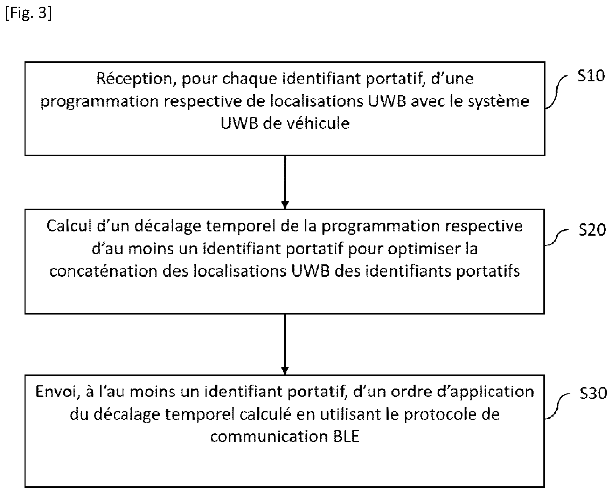

En référence à l'organigramme de la figure 3, on propose un procédé de planification implémenté par un système de véhicule comprenant un ou plusieurs capteurs UWB. Le système a enregistré une pluralité d'identifiants portatifs. Le système et chaque identifiant portatif sont configurés pour communiquer en utilisant les protocoles de communication UWB et BLE. Le procédé comprend une réception S10, pour chaque identifiant portatif, d'une programmation respective comprenant une répétition, à une fréquence respective, de localisations UWB avec le système UWB de véhicule. Le procédé comprend un calcul S20 d'un décalage temporel de la programmation respective d'au moins un identifiant portatif pour optimiser la concaténation des localisations UWB des identifiants portatifs. Le procédé comprend un envoi S30, à l'au moins un identifiant portatif, d'un ordre d'application du décalage temporel calculé en utilisant le protocole de communication BLE.

Le procédé offre une utilisation améliorée au système UWB de véhicule.

En effet, l'application par l'au moins un identifiant portatif du décalage calculé permet de regrouper les localisations UWB des identifiants portatifs, ce qui améliore le fonctionnement du système. Premièrement, l'optimisation de la concaténation des localisations UWB laisse plus d'espace libre entre les groupes de localisations UWB exécutées à la suite, ce qui laisse de l'espace pour exécuter des localisations UWB supplémentaires. Cela permet donc de réduire le risque de collision lorsqu'un un nouvel identifiant portatif est ajouté. Deuxièmement, cette exécution permet aux composants du système de véhicule impliqués de s'éteindre et de s'allumer un nombre réduit de fois (après chaque groupe de localisations exécutées à la suite), ce qui réduit l'énergie consommée et l'usure. Le procédé permet donc d'améliorer le fonctionnement du système à plusieurs niveaux.

On propose également un procédé d'utilisation d'un système de véhicule comprenant un ou plusieurs capteurs UWB. Le système a enregistré une pluralité d'identifiants portatifs. Le procédé d'utilisation comprend une exécution des localisations UWB planifiées selon le procédé de planification. Le procédé d'utilisation peut être exécuté par le système de véhicule et/ou la pluralité d'identifiants portatifs.

Après ou pendant l'exécution des localisations, le procédé d'utilisation peut comprendre une détermination de la position de chacun des identifiants portatifs à partir des localisations qui ont été exécutées. Par exemple, pour chaque identifiant portatif, l'exécution d'une localisation impliquant l'identifiant portatif peut comprendre une fourniture d'une position relative de l'identifiant portatif par rapport au système de véhicule (ci-après également appelé « système UWB »). Par exemple, la localisation peut comprendre, pour chaque capteur (ou ancre) UWB, une mesure de distance respective entre l'identifiant portatif et le capteur UWB, et, une détermination de la position relative de l'identifiant portatif par rapport au système UWB à partir des mesures de distance respectives entre l'identifiant portatif et chacun des capteurs UWB. La position déterminée peut varier au cours du temps. Par exemple, chaque localisation peut fournir une position d'un identifiant portatif par rapport au système UWB à un instant donné, et l'ensemble des localisations impliquant cet identifiant portatif exécutées peuvent fournir une évolution de la position de cet identifiant portatif au cours du temps. Le procédé d'utilisation peut ainsi déterminer une évolution de la position de tous les identifiants portatifs.

Après l'exécution des localisations, le procédé d'utilisation peut comprendre une ou plusieurs utilisations des positions relatives des identifiants portatifs déterminées. Par exemple, le procédé d'utilisation peut comprendre une activation d'une ou plusieurs fonctionnalité du véhicule en fonction des positions relatives des identifiants portatifs. Par exemple, la fonctionnalité peut comprendre une fermeture du véhicule lorsqu'il est déterminé que les identifiants portatifs se trouvent à l'extérieur du véhicule, par exemple après écoulement d'une durée prédéterminée entre le moment où il est déterminé que chacun des identifiants portatifs est à l'extérieur. Dans des exemples, la fonctionnalité peut comprendre un déverrouillage sélectif d'un ou plusieurs ouvrants du véhicule (par exemple une porte conducteur, une porte passager ou un coffre du véhicule) en fonction des positions relatives des identifiants portatifs déterminées. Par exemple, la fonctionnalité peut comprendre un déverrouillage de la porte conducteur et du coffre du véhicule lorsque la position d'un des identifiants portatifs s'approche de la porte conducteur (par exemple le boîtier de clé) et que la position d'un autre des identifiants portatifs (par exemple un dispositif tier) s'approche du coffre (c'est-à-dire lorsque deux utilisateurs portant ces identifiants s'approchent vers ces ouvrants, par exemple en même temps ou l'un après l'autre). Dans d'autres exemples, la fonctionnalité peut comprendre un déverrouillage de la porte conducteur et/ou des portes passager (par exemple lorsqu'un ou plusieurs utilisateurs s'approchent de ces ouvrants), et, une réalisation, pour chaque utilisateur, d'un ou plusieurs réglages (par exemple réglage de hauteur d'appui-tête ou de position de siège) en fonction d'une zone d'accès de l'utilisateur (par exemple en fonction de l'ouvrant vers lequel l'utilisateur s'est approché). Dans d'autres exemples encore, la fonctionnalité peut comprendre une activation d'une ou plusieurs fonctions du véhicule telles qu'un allumage de musique ou un réglage des rétroviseurs convenant à la personne portant l'identifiant portatif qui est positionné au niveau du siège conducteur. Le procédé d'utilisation peut comprendre toute combinaison de ces exemples de fonctionnalité.

Le procédé de planification est maintenant discuté. Les étapes du procédé de planification peuvent être exécutées par le système du véhicule. Chaque étape de ce procédé est maintenant discutée plus en détail.

Le système UWB a enregistré une pluralité d'identifiants portatifs (ou dispositifs portatifs). Le terme « identifiant portatif » désigne un objet mobile identifiable par le véhicule, et par exemple dont la localisation autorise ou non une ou plusieurs actions (spécifiques) du véhicule. Par exemple, l'identifiant peut être utilisé pour ouvrir le véhicule et/ou allumer le moteur du véhicule. Par exemple, le procédé peut comprendre une ouverture du véhicule lorsque l'identifiant est localisé à proximité du véhicule, ou un allumage du moteur lorsque l'identifiant est dans le véhicule. Les identifiants portatifs enregistrés par le système peuvent comprendre au moins un boîtier de clé télécommande du véhicule. Les identifiants portatifs enregistrés par le système peuvent également comprendre un ou plusieurs dispositifs tiers, c'est-dire fabriqués par une entreprise qui diffère de celle fabriquant le système UWB du véhicule. Par exemple, les un ou plusieurs dispositifs tiers peuvent comprendre des appareils intelligents (aussi appelé dispositifs intelligents, en anglais « smart device »), tels que des montres connectées ou des téléphones portables.

Le véhicule et chaque identifiant portatifs peuvent être configurés pour communiquer en utilisant le protocole de communication UWB (acronyme de l'anglais « Ultra Wide Band », qui signifie en français « Bande Ultra Large »). UWB peut faire référence à un protocole de communication, par exemple celui spécifié par l'IEEE 802.15.4. Le véhicule et un ou plusieurs identifiants portatifs (par exemple tous) peuvent également être configurés pour communiquer en utilisant un ou plusieurs autres protocoles de communication, comme par exemple le protocole de communication BLE (acronyme de l'anglais « Bluetooth Low Energy », qui signifie en français « Bluetooth faible énergie ») ou le protocole de communication NFC (acronyme de l'anglais « Near Field Communication », qui signifie en français « Communication en Champ Proche »).

Le procédé comprend, pour chaque identifiant portatif, une réception S10 d'une programmation respective de localisations UWB avec le système UWB de véhicule par les un ou plusieurs capteurs UWB. La programmation reçue peut être une donnée numérique comprenant de l'information incluant une répétition, à une fréquence respective, de localisations UWB avec le système UWB de véhicule. La programmation respective reçue pour chaque identifiant portatif peut comprendre, pour chaque localisation UWB de la programmation, des données numériques définissant un positionnement temporel de la localisation UWB, par exemple sur un axe (ou une ligne) de temps. Par exemple, la programmation respective reçue pour chaque identifiant portatif peut comprendre, pour chaque localisation UWB de la programmation, la fréquence de répétition des localisations, et/ou des instants de début et de fin de la première (ou de chaque) localisation renseignés sur ledit axe de temps. L'axe de temps peut représenter une durée à venir et qui n'est pas encore écoulée au moment de la réception de la programmation. Par exemple, la programmation respective peut comprendre, pour un ensemble de périodes successives (de durée sensiblement égale), une localisation UWB pour chaque période. En particulier, chaque période peut comprendre un nombre identique de créneaux successifs (de durée sensiblement égale), et la localisation UWB peut être programmée à l'intérieur d'un de ces créneaux. Les données numériques peuvent dans ce cas comprendre, pour chaque localisation UWB, le numéro du créneau sur lequel la localisation UWB est programmée. Alternativement ou additionnellement, les données numériques peuvent comprendre une donnée désignant un instant de début de ce créneau sur lequel la localisation est programmée et une donnée désignant un instant de fin de ce créneau. Alternativement ou additionnellement, les données numériques définissant chaque localisation peuvent comprendre des données numériques définissant chacune des émissions UWB de la localisation UWB. Par exemple, les données numériques peuvent désigner un instant de début et un instant de fin de chaque échange UWB de la localisation UWB.

Dans des exemples, les fréquences respectives avec lesquelles les localisations UWB sont répétées représentent chacune une période respective égale à un multiple d'une durée prédéterminée, par exemple égale à un multiple de 96 millisecondes (par exemple 96,192 ou 288 ms). Ainsi, chaque identifiant portatif peut exécuter des localisations espacées d'une durée égale à un multiple de cette durée prédéterminée.

Chaque identifiant portatif enregistré peut être configuré pour envoyer sa programmation respective qui est reçue par le système UWB. Chaque identifiant portatif enregistré peut être dans un périmètre donné autour du véhicule permettant l'envoi au système UWB de sa programmation respective. Les programmations respectives peuvent être envoyées par les identifiants portatifs et reçues par le système UWB en utilisant un protocole de communication d'accompagnement (tel que le protocole de communication BLE). Le système UWB peut également avoir enregistré un ou plusieurs autres identifiants (ou dispositifs) portatifs, qui peuvent par exemple être actuellement hors de portée. La prise en compte de ces autres identifiants portatifs est discutée ultérieurement.

Après ou pendant la réception S10, le procédé peut comprendre, un enregistrement de toutes les programmations reçues, par exemple sur une mémoire du système. La programmation reçue de chaque identifiant portatif peut comprendre la fréquence respective de répétition, le nombre de créneaux par période et/ou la durée de chaque créneau ou de chaque période. Pour chaque période, la programmation peut également comprendre une indication du créneau sur lequel la localisation UWB est programmée pour cette période (celui-ci pouvant être fixe). Ces informations peuvent être propre à l'identifiant portatif. L'identifiant portatif peut être configuré pour imposer certains paramètres de sa programmation.

Chaque localisation UWB peut comprendre un ou plusieurs échanges UWB entre l'identifiant portatif et les capteurs UWB du système. Chaque échange UWB peut être constitué d'envois de trames entre l'identifiant et les un ou plusieurs capteurs UWB. La programmation des une ou plusieurs localisations peut comprendre, pour chaque localisation, une détermination d'une position temporelle pour chacun des envois de trames de chacun des échanges UWB de la localisation. Un envoi d'une trame d'un échange UWB peut avoir une durée comprise entre 60 et 137 microsecondes.

Après la réception S10, le procédé comprend le calcul S20 du décalage temporel de la programmation respective d'au moins un identifiant portatif pour optimiser la concaténation des localisations UWB des identifiants portatifs. L'expression « optimiser la concaténation » signifie optimiser le regroupement, c'est-à-dire l'exécution successive (sans ou avec peu d'interruption(s)), des localisations UWB impliquant les différentes identifiants portatifs (pour accoler temporelle ces localisations UWB). En d'autres termes, l'expression « optimiser la concaténation » signifie organiser temporellement de façon optimale les localisations UWB (appelées aussi trains d'échanges radio UWB) relatives à chacun des identifiants portatifs. L'optimisation réalisée porte sur la maximisation du « regroupement » ou de la « concaténation » des localisations UWB. Dans d'autres exemples, ce critère pourrait ne pas être le seul critère utilisé, et le procédé pourrait appliquer d'autres critères d'optimisation (par exemple dans le cadre de contrainte de gestion multi-RAN).

Par exemple, le calcul peut comprendre une détermination d'une distance temporelle entre l'une des localisations UWB impliquant l'au moins un identifiant portatif décalé, et une localisation UWB impliquant un autre identifiant portatif, puis une estimation du décalage temporel à appliquer pour réduire cette distance temporellement déterminée (par exemple pour la réduire à zéro, c'est-à-dire pour accoler temporelle la localisation UWB impliquant l'au moins un identifiant portatif décalé et celle impliquant l'autre identifiant portatif). L'expression « accoler temporellement » signifie faire correspondre l'instant de début de la première localisation UWB avec celui de fin de la localisation UWB suivante, par exemple exactement (c'est-à-dire sans interruption entre les deux localisations), ou bien avec un léger espacement prédéterminée (par exemple de faible durée par rapport à la période ou le créneau). Les instants de début et de fin peuvent être ceux des créneaux sur lesquels les localisations UWB sont prévus (ceux-ci pouvant différés des instants de fin des derniers échanges UWB réalisées pendant les localisations). Le décalage temporel est appliqué à toute la programmation respective, c'est-à-dire que chaque localisation UWB de la programmation impliquant l'au moins un identifiant portatif est décalée (le décalage est appliqué à toutes les localisations UWB qui seront à exécuter ensuite). Le calcul S20 du décalage temporel peut également prendre en compte tout autre critère d'optimisation supplémentaire.

Dans un premier exemple d'implémentation par exemple, la pluralité d'identifiants portatifs comprend un premier identifiant portatif et un deuxième identifiant portatif. Le décalage temporel peut être calculé pour accoler temporellement les localisations UWB impliquant le premier identifiant portatif et les localisations UWB impliquant le deuxième identifiant portatif. Par exemple, le calcul peut comprendre une détermination de l'espacement temporel entre les localisations impliquant le premier identifiant portatif et les localisations impliquant le deuxième identifiant portatif, puis un calcul du décalage pour réduire cet espacement temporel (par exemple pour accoler, c'est-à-dire mettre bout à bout, les localisations des deux identifiants). Les localisations étant exécutées de manière périodique, le procédé peut comprendre le calcul du décalage à appliquer pour l'une des périodes, puis une application de ce décalage calculé pour toute les périodes suivantes (celui-ci fonctionnant également).

Dans un deuxième exemple d'implémentation par exemple, la pluralité d'identifiants portatifs peut comprendre en outre au moins un troisième identifiant portatif (en plus des premier et deuxième identifiants portatifs). Dans ce cas, le procédé peut comprendre le calcul d'un décalage temporel et l'envoi d'un ordre d'application pour chacune des programmations respectives des deuxième et troisième identifiants portatifs (ceux-ci étant décalés pour accoler leurs localisations à celles du première identifiant portatif). Dans ce cas également, le décalage temporel calculé pour chacun des premier et deuxième identifiants portatifs peut être calculé pour accoler temporellement ses localisations UWB à celles du première identifiant portatif. Le décalage temporel appliqué au premier identifiant portatif peut être différent de celui appliqué au deuxième.

Après le calcul S20, le procédé comprend l'envoi S30, à l'au moins un identifiant portatif, de l'ordre d'application du décalage temporel calculé. L'ordre d'application est envoyé en utilisant le protocole de communication BLE, c'est-à-dire qu'il peut être envoyé par un message encodé dans ce protocole BLE. L'au moins un identifiant portatif peut être configuré pour exécuter l'ordre reçu, c'est-à-dire appliquer le décalage calculé à sa programmation respective, et donc aux localisations UWB qui seront à réaliser ensuite. Cet étape peut être réalisée de n'importe quelle manière. Par exemple, l'envoi peut comprendre un encodage du décalage temporel calculé dans un message BLE, puis l'envoi de ce message à l'au moins un identifiant portatif.

Dans des exemples, il est possible qu'aucun décalage significatif ne soit déduit. Par exemple, le procédé peut s'exécuter de manière cyclique avec une répétition des étapes du procédé (notamment de l'étape S20 du calcul du décalage temporel), et, pour au moins une répétition, le procédé peut ne pas appliquer le décalage temporel calculé. Par exemple, le décalage temporel calculé peut ne pas être supérieur à 1/3 ms. Cela peut être le cas lorsqu'un premier recalage initial aura été fait pour caler les trains radios et que la dérive d'horloge n'est pas importante entre les différents émetteurs constituants des trains adjacents. Dans ce cas, l'étape S30 peut être sautée pour un cycle. Par exemple, à chaque répétition, le procédé peut comprendre, après l'étape S20 de calcul du décalage temporel, une comparaison du décalage temporel calculé avec un seuil prédéterminé (par exemple 1/3 ms), et, une exécution de l'étape S30 uniquement lorsque la comparaison indique que le décalage temporel calculé est supérieur au seuil prédéterminé.

Dans des exemples, les étapes de calcul S20 et d'envoi S30 peuvent être répétées à chaque réception S10 d'une nouvelle programmation respective pour un nouvel identifiant portatif. Par exemple, ce nouvel identifiant portatif peut initialement être hors de portée du véhicule, et l'utilisateur le portant peut s'approcher du véhicule. Ce nouvel identifiant peut également être enregistré par le système UWB (en plus des autres). Pendant que l'utilisateur approche du véhicule, une fois que le nouvel identifiant entre dans le périmètre BLE autour du véhicule, le nouvel identifiant peut être configuré pour commencer une localisation avec le véhicule. Pour cela, le nouvel identifiant peut être configuré pour envoyer sa programmation respective au système UWB. Le procédé peut alors comprendre une réception de cette programmation respective pour ce nouvel identifiant (comme pour les autres identifiants à l'étape S10). Dans ce cas, le procédé peut comprendre une répétition des étapes S20 et S30 avec la nouvelle programmation respective reçue pour le nouvel identifiant. Par exemple, la répétition du calcul S20 peut comprendre une détermination de l'espacement entre les localisations UWB impliquant le nouvel identifiant et de celles impliquant les autres, et la détermination d'un décalage temporel pour réduire cet espacement. Le procédé peut ensuite comprendre l'envoi S30 du décalage temporel calculé pour ce nouvel identifiant portatif à ce nouvel identifiant portatif.

Dans des exemples, le décalage temporel peut être à appliquer à partir d'une période à venir espacée d'une période en cours au moment de l'exécution du procédé. L'espacement entre la période en cours et la période à venir peut être égal à un nombre prédéterminé de périodes. Cette temporisation améliore le fonctionnement du système, puisqu'elle permet de prendre en compte la latence du système. Par exemple, le système peut demander l'exécution du décalage pour les localisations UWB qui sont prévues après l'exécution d'un nombre prédéterminé de localisations UWB (par exemple après les deux ou trois prochaines localisations). Pour cela, l'ordre envoyé peut comprendre également l'espacement souhaité avec le moment présent (par exemple exprimé en période ou en temps). Dans ce cas, l'au moins un identifiant portatif peut être configuré pour attendre l'exécution de ce nombre prédéterminé de localisations avant d'exécuter le décalage. Alternativement, le système peut n'envoyer l'ordre qu'une fois que le nombre prédéterminé de localisations a été exécuté, et l'identifiant portatif peut dans ce cas être configuré pour exécuter le décalage directement à réception de l'ordre (et donc pour toutes les prochaines localisations).

Dans des exemples, les étapes de calcul et d'envoi peuvent être répétées au moins toutes les 25 secondes. Cela améliore la planification et réduit le risque de collision. En effet, chaque dérive d'horloge entraîne un risque de collision potentielle. Comme le recommande la norme IEEE 802.15.4z, l'horloge du PHY UWB se situe à +/- 20 ppm (2,4 ms/minute). L'écoulement de 25 secondes (erreur inférieure ou égale à 1 ms) au maximum entre deux répétition est donc un intervalle de temps raisonnable pour procéder à un décalage temporel afin de compenser cette erreur.

Des exemples vont maintenant être décrits en référence aux figures 3 à 6.

Dans le cadre de la nouvelle génération de systèmes d'ouverture/démarrage passifs pour véhicules (appelés PEPS) utilisant les technologies BLE et UWB pour se connecter respectivement au véhicule et utiliser ensuite la communication UWB établie comme moyen de localisation d'un dispositif d'accès (comme un smartphone, une smartwatch ou un porte-clés), de multiples sessions concurrentes sur le même réseau de télémétrie UWB peuvent entraîner une baisse de la qualité de service.

Le procédé de planification vise à optimiser l'utilisation de l'espace temporel de la communication UWB et, par conséquent, à améliorer la qualité de la télémétrie en évitant les collisions entre les tentatives de localisations concurrentes d'accès au système.

La communication BLE est un canal authentifié/sécurisé. La communication BLE est toujours active avant l'activation de la communication UWB et reste active pendant la session de télémétrie UWB. En particulier, à une distance raisonnable du véhicule, la communication BLE est utilisée pour déclencher la communication UWB par un message (hors bande) dédié.

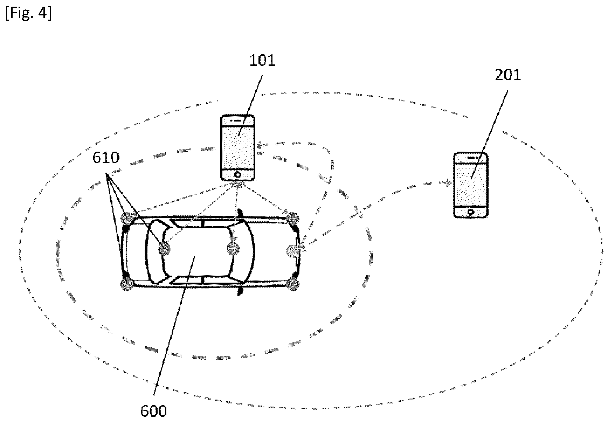

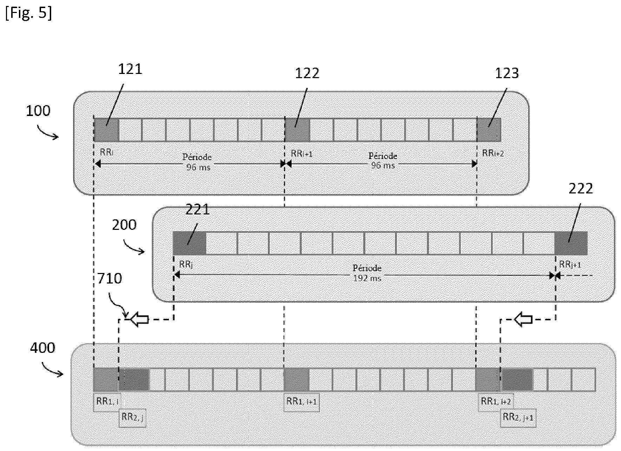

Les figures 4 et 5 illustrent un premier exemple d'implémentation du procédé de planification. Dans cet exemple, le système de véhicule 600 comprend six capteurs UWB 610. Les identifiants portatifs 101 et 201 (ou dispositifs d'accès) sont enregistrés par le système de véhicule 600. Le système 600 et chacun des identifiants portatifs 101, 201 sont configurés pour communiquer en utilisant les protocoles de communication UWB et BLE. Le procédé comprend une réception S10, pour chaque identifiant portatif, d'une programmation respective comprenant une répétition, à une fréquence respective, de localisations UWB avec le système UWB de véhicule. Comme illustré sur la figure 5, le système réception la programmation 100 pour l'identifiant portatif 101 et la programmation 200 pour l'identifiant portatif 201. Les programmations respectives 100 et 200 peuvent être échangées avec le système du véhicule une fois que les identifiants portatifs ont lancé une session de localisation UWB. Chaque identifiant portatif définit sa propre périodicité de localisations. La structure de la programmation et sa durée dépendent des capacités de l'appareil (durée du créneau), de la structure du cycle de télémétrie et du nombre de répondeurs dans le cycle de télémétrie. Dans cet exemple, les programmations respectives reçues des deux identifiants portatifs sont celles illustrées sur la figure 1.

Comme expliqué en référence à la figure 2 plus haut, en l'absence d'utilisation du procédé de planification, comme l'heure d'initiation des programmations ne dépend que de l'identifiant portatif, les deux points de départ des programmations respectives des identifiants portatifs sont désalignés, ce qui se traduit par une utilisation non optimale du temps.

Comme illustré sur la figure 5, le procédé de planification permet d'optimiser le temps d'occupation des localisations UWB en regroupant les localisations UWB autant que possible. En effet, le procédé comprend le calcul d'un décalage temporel 710 de la programmation respective d'au moins un identifiant portatif pour optimiser la concaténation des localisations UWB des identifiants portatifs. En particulier, dans cet exemple, la programmation respective de l'identifiant portatif 201 est décalée pour que l'instant de début chaque localisation UWB de cette programmation (les localisations 221, 222) corresponde à l'instant de fin d'une localisation UWB impliquant l'identifiant portatif 101. Le procédé comprend ensuite l'envoi, à l'identifiant portatif 201, d'un ordre d'application du décalage temporel calculé 710 en utilisant le protocole de communication BLE. La localisation 221 est donc exécutée juste après la localisation 121, et la localisation 222 juste après la localisation 123, ce qui évite au système de devoir s'éteindre et se réallumer après chaque exécution de ces localisations. En outre, ce décalage permet d'aménager de plus espaces libres entre les localisations, ce qui permet de faciliter l'incorporation de nouvelles localisations UWB (par exemple dans le cas où un nouvel identifiant portatif viendrait à se connecter avec le système).

Dans cet exemple, le décalage temporel calculé 710 est calculé de sorte à ce que la localisation 221 soit exécutée juste après la localisation 121, et la localisation 222 juste après la localisation 123. Néanmoins, dans d'autres exemples, ce choix pourrait être différent. Par exemple, le décalage temporel 710 pourrait être calculé de sorte à ce que les localisations 221 et 222 soient exécutées avant les localisations 121 et localisations 222 (avec un décalage plus important). En fonction des différentes contraintes des identifiants portatifs (par exemple de la périodicité et de la durée des périodes), le système du véhicule peut donc utiliser différentes stratégies pour optimiser la concaténation des programmations respectives en fonction des besoins.

Pour réaliser le décalage, un message hors bande est transmis par le système de véhicule à l'identifiant portatif 201 sélectionné via la communication BLE pour l'informer qu'un décalage horaire doit être appliqué au cours de la *n*^{ième} période à venir. *n* est égal au numéro de la période en cours auquel il est ajouté un nombre K de périodes (avec K par exemple égal au résultat de la division de 500 ms par la durée de chaque période, arrondi à unité supérieure, ce délai de 500ms pouvant être, par exemple pour des applications très lentes loT, « Internet des objets », négocié comme un élément de configuration après la connexion BLE). Cela permet de tenir compte de la latence du système (c'est-à-dire le temps de transmission et de traitement du message BLE de bout en bout). Le décalage temporel peut être positif ou négatif. Son unité peut être de l'ordre d'une fraction de milliseconde (1/3 de milliseconde par exemple). Un compteur absolu de période (c'est-à-dire par exemple un index de bloc tel que spécifié dans la norme CCC R3) peut être transmis par l'identifiant portatif dans chaque période.

Chaque fois qu'un nouvel identifiant portatif envoie une nouvelle programmation (nouvelle session UWB), le décalage calculé peut être inférieur à la durée d'une période moins la durée d'une localisation UWB. Par exemple, dans l'exemple de la figure, le décalage peut aller jusqu'à +/-176 ms (c'est-à-dire 192ms-16ms).

Chaque fois qu'une dérive d'horloge entraîne une collision potentielle, comme le recommande la norme IEEE 802.15.4z, l'horloge du PHY UWB peut être réglée à +/-20 ppm (soit 2,4 ms/minute). La répétition des étapes de calcul et d'envoi toutes les 25 secondes permet donc l'écoulement d'un intervalle de temps raisonnable pour que le décalage temporel compense cette erreur de dérive d'horloge (pour une telle fréquence de répétition, l'erreur maximum résultante est de 1 ms).

Dans des exemples, le procédé peut utiliser pour le calcul du décalage temporel d'autres considérations telles que la reconfiguration de plusieurs programmations pour optimiser l'utilisation du temps moyen et/ou pour éviter une erreur récurrente détectée en raison d'interférences RF (acronyme de Radio Fréquence) ou d'environnements radio bruyants.

Le procédé de planification permet donc de tirer parti de la connexion BLE existante pour communiquer les informations de localisations UWB avec un trafic supplémentaire relativement faible. Le procédé permet également d'éviter les collisions en cas d'accès simultané et augmente ainsi la qualité de service de la portée, notamment par rapport à d'autres méthodes basées sur un temps d'inter-transmission suivant une loi de de probabilité aléatoire prédéterminée telles que spécifiées dans la norme CCC R3. En effet, dans de telles méthodes, l'utilisation de ce temps d'inter-transmission génère de la diversité temporelle et inévitablement des collisions, ce qui conduit à une occupation du support sous optimale (nombre de terminaux connectés inférieur à l'optimal). Le procédé permet d'optimiser l'occupation du support par rapport à ces méthodes. Le procédé permet également de maximiser le nombre de sessions UWB simultanées possibles sur le même véhicule UWB. Le procédé permet également regrouper les localisations UWB, ce qui permet de réduire le nombre de transitions veille/réveil (réduction de la consommation d'énergie).

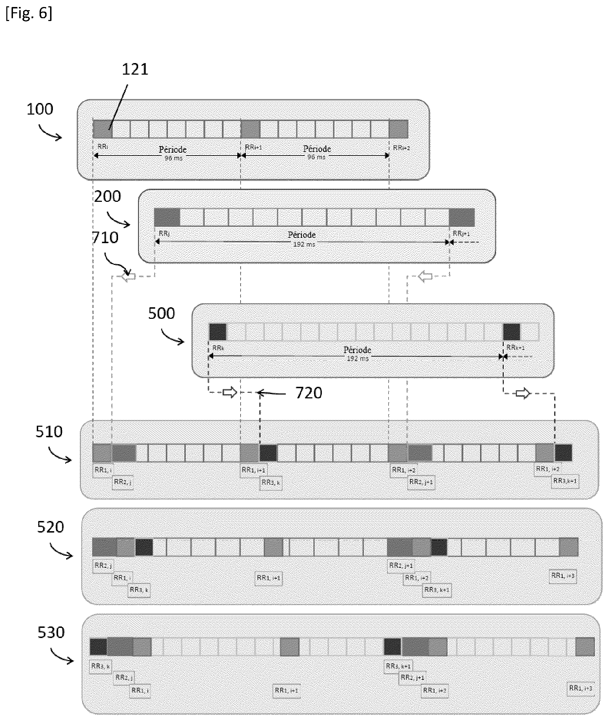

La figure 6 illustre un deuxième exemple d'implémentation du procédé de planification. Dans cet exemple, trois identifiants portatifs (au lieu de deux dans le premier exemple de la figure 5) envoient chacun une programmation respective au système de véhicule (les programmations 100, 200 et 500 reçues des trois identifiants sont illustrées sur la figure 6).

Le procédé répète les étape de calcul et d'envoi d'un décalage pour chacun des deux identifiants 200 et 500 (leurs programmations sont décalées par rapport à celle du premier 100). La figure 6 illustre trois scenarios de décalage de ces programmations qui peuvent être mis en œuvre par le système de véhicule. Dans le premier scenario 510, la programmation 200 du deuxième identifiant portatif est décalée d'un décalage 710 qui est le même que dans l'exemple de la figure 5. Par exemple, le deuxième identifiant portatif peut avoir été détectée avant le troisième, et peut avoir déjà été décalé avant que le troisième n'envoie sa programmation (en d'autres termes, la situation de la figure 6 peut suivre celle de la figure 5). Le procédé de planification peut décaler la programmation 500 du troisième identifiant portatif selon le décalage 720. Un tel décalage permet en effet de placer les localisations UWB avec ce troisième identifiant portatif juste après celles du premier identifiant qui ne sont pas déjà suivies par une localisation UWB avec le deuxième identifiant portatif. En effet, la fréquence des localisations UWB du deuxième et du troisième identifiants portatifs étant deux fois plus faible que celle du premier identifiant portatif, il est possible d'alterner ainsi les localisations UWB qui impliquent le deuxième identifiant portatif et celles qui impliquent le troisième identifiant portatif.

Dans le deuxième scenario 520, les localisations UWB impliquant le troisième identifiant portatif sont placées après celles impliquant le deuxième identifiant portatif. Le système de véhicule réalise donc périodiquement trois localisations à la suite, puis une seule (avec le premier identifiant portatif, celui-ci ayant une fréquence plus importante). Dans le troisième scenario 530, la même chose se produit, mais les localisations UWB impliquant le troisième identifiant portatif sont placées avant celles impliquant le premier identifiant portatif (voir la figure 6).

Dans ces trois différents exemple de scenario, le procédé offre une utilisation améliorée au système UWB de véhicule. En effet, l'application à chacun des deuxième et troisième identifiants portatifs, d'un décalage respectif permet de regrouper les localisations UWB des trois identifiants portatifs, ce qui améliore le fonctionnement du système. Premièrement, l'optimisation de la concaténation des localisations UWB laisse plus d'espace libre entre les groupes de localisations UWB exécutées à la suite, ce qui laisse plus d'espace pour exécuter des localisations UWB supplémentaires (entre les groupes de deux localisations pour le premier scenario, et entre le groupe de trois localisation et la localisation isolée pour les deuxième et troisième scenarios). Cela permet donc de réduire le risque de collision lorsqu'un un nouvel identifiant portatif est ajouté. Deuxièmement, cette exécution permet aux composants du système de véhicule impliqués de s'éteindre et de s'allumer un nombre réduit de fois (après chaque groupe de localisations exécutées à la suite), ce qui réduit l'énergie consommée et l'usure (le système peut rester allumer pour exécuter les localisations groupées ensemble). Le procédé permet donc d'améliorer le fonctionnement du système.

## Revendications

1. Procédé de planification implémenté par un système de véhicule comprenant un ou plusieurs capteurs UWB, le système ayant enregistré une pluralité d'identifiants portatifs, le système et chaque identifiant portatif étant configurés pour communiquer en utilisant les protocoles de communication UWB et BLE, le procédé comprenant :
• une réception (S10), pour chaque identifiant portatif, d'une programmation respective comprenant une répétition, à une fréquence respective, de localisations UWB avec le système UWB de véhicule ;
• un calcul (S20) d'un décalage temporel de la programmation respective d'au moins un identifiant portatif pour optimiser la concaténation des localisations UWB des identifiants portatifs ; et
• un envoi (S30), à l'au moins un identifiant portatif, d'un ordre d'application du décalage temporel calculé en utilisant le protocole de communication BLE.

2. Procédé selon la revendication 1, dans lequel la pluralité d'identifiants portatifs comprend un premier identifiant portatif et un deuxième identifiant portatif, le décalage temporel étant calculé pour accoler temporellement les localisations UWB impliquant le premier identifiant portatif et les localisations UWB impliquant le deuxième identifiant portatif.

3. Procédé selon la revendication 2, dans lequel la pluralité d'identifiants portatifs comprend en outre au moins un troisième identifiant portatif, le procédé comprenant le calcul d'un décalage temporel et l'envoi d'un ordre d'application pour chacune des programmations respectives des deuxième et troisième identifiants portatifs, le décalage temporel étant calculé pour accoler temporellement les localisations UWB impliquant les premier, deuxième et troisième identifiants portatifs.

4. Procédé selon l'une quelconque des revendications 1 à 3, dans lequel le décalage temporel est à appliquer à partir d'une période à venir espacée d'une période en cours au moment de l'exécution du procédé, l'espacement entre la période en cours et la période à venir étant égal à un nombre prédéterminé de périodes.

5. Procédé selon l'une quelconque des revendications 1 à 4, dans lequel les fréquences respectives avec lesquelles les localisations UWB sont répétées représentent chacune une période respective égale à un multiple d'une durée prédéterminée, par exemple égale à un multiple de 96 millisecondes.

6. Procédé selon l'une quelconque des revendications 1 à 5, dans lequel les étapes de calcul et d'envoi sont répétés au moins toutes les 25 secondes.

7. Procédé selon l'une quelconque des revendications 1 à 6, dans lequel les étapes de calcul et d'envoi sont répétées à chaque réception d'une nouvelle programmation respective pour un nouvel identifiant portatif.

8. Procédé d'utilisation d'un système de véhicule comprenant un ou plusieurs capteurs UWB, le système ayant enregistré une pluralité d'identifiants portatifs, le procédé comprenant une exécution des localisations UWB planifiées selon le procédé de l'une quelconque des revendications 1 à 7.

9. Système de véhicule comprenant un ou plusieurs capteurs UWB et configuré pour exécuter le procédé de l'une quelconque des revendications 1 à 7 et/ou pour être utilisé selon le procédé de la revendication 8.

10. Programme informatique comprenant des instructions de code de programme pour l'exécution du procédé selon l'une quelconque des revendications 1 à 7 et/ou selon la revendication 8, lorsque ledit programme est exécuté par un processeur.
